# EUROPÄISCHE PATENTANMELDUNG

(11) **EP 4 703 151 A1**
(43) Veröffentlichungstag der Anmeldung: **04.03.2026**
(21) Anmeldenummer: 25187134.9
(22) Anmeldetag: 03.07.2025
(51) Int. Cl.: B60C 9/00, B60C 9/18

(54) **VERSTÄRKUNGSSTREIFEN FÜR EINEN FAHRZEUGREIFEN, VERFAHREN ZUR HERSTELLUNG UND FAHRZEUGREIFEN**

(30) Priorität: 26.08.2024 DE 102024208103
(71) Anmelder: Continental Reifen Deutschland GmbH, 30175 Hannover (DE)
(72) Erfinder: Reese, Wolfgang, 30175 Hannover (DE)
(74) Vertreter: Continental Corporation

(57) **Zusammenfassung**

Die Erfindung betrifft einen Verstärkungsstreifen für einen Fahrzeugreifen, vorzugsweise für eine Gürtelbandagenlage eines Fahrzeugluftreifens, wobei der Verstärkungsstreifen Kautschukmaterial aufweist, in welches lediglich ein textiler Festigkeitsträger oder lediglich eine Schar von parallel und beabstandet zueinander angeordneten textilen Festigkeitsträgern eingebettet ist oder sind. Die Erfindung betrifft weiter ein Verfahren zur Herstellung eines Streifens sowie einen Reifen aufweisend einen Streifen.

Aufgabe ist eine kostengünstige und einfache Herstellbarkeit.

Dies wird erreicht, indem der Festigkeitsträger als Einzelkord aus genau einem Multifilamentgarn aufweisend einen Twistfaktor von 105 bis 200, bevorzugt von **110** bis 150, gebildet ist.

## Beschreibung

Die Erfindung betrifft einen Verstärkungsstreifen für einen Fahrzeugreifen, vorzugsweise für eine Gürtelbandagenlage eines Fahrzeugluftreifens, wobei der Verstärkungsstreifen Kautschukmaterial aufweist, in welches lediglich ein textiler Festigkeitsträger oder lediglich eine Schar von parallel und beabstandet zueinander angeordneten textilen Festigkeitsträgern eingebettet ist oder sind. Weiter betrifft die Erfindung ein Verfahren zur Herstellung eines Verstärkungsstreifens sowie einen Fahrzeugreifen aufweisend ein Festigkeitsträgerlage mit einem Verstärkungsstreifen.

Festigkeitsträgerlagen für Fahrzeugluftreifen und deren Festigkeitsträger sind dem Fachmann in Aufbau und Material in unterschiedlichsten Ausführungen bekannt.

Bei Fahrzeugluftreifen, insbesondere PKW-Luftreifen, werden Festigkeitsträger im Wulstbereich, als Karkassmaterial, für Gürtellagen und in der Gürtelbandagenlage eingesetzt. Die Festigkeitsträger werden während der Herstellung der Reifen in eine Kautschukmischung eingebettet, um als gummierte Festigkeitsträgerlage im Reifen eingesetzt werden zu können.

Die Gürtelbandage dient bei Fahrzeugluftreifen und insbesondere beim Hochgeschwindigkeitseinsatz dazu, eine Erhebung des Reifens durch die im Fahrbetrieb auftretenden Fliehkräfte zu verhindern. Sie ist bei einem Fahrzeugluftreifen, welcher im Allgemeinen eine luftundurchlässige Innenschicht, eine Festigkeitsträger enthaltende insbesondere in radialer Bauart ausgebildete Karkasse, die vom Zenitbereich des Reifens über die Seitenwände bis in den Wulstbereich reicht und dort meist durch Umschlingen zugfester Wulstkerne verankert ist, einen radial außen befindlichen, Profilrillen aufweisenden Laufstreifen und einen Gürtel, zwischen Gürtel und Laufstreifen angeordnet. Die Gürtelbandage kann ein- oder mehrlagig ausgebildet sein, deckt zumindest die Gürtelränder ab und enthält parallel und im Wesentlichen in Umfangsrichtung verlaufende textile Festigkeitsträger, die in eine Kautschukmischung eingebettet sind. Die Gürtelbandage wird bei der Reifenherstellung in Form von Lagen, Streifen oder Einzelfestigkeitsträgern mit in eine unvulkanisierte Kautschukmischung eingebetteten Festigkeitsträgern aufgebracht, die auf den Gürtel gewickelt oder gespult werden. Die Festigkeitsträger werden für solche Festigkeitsträgerlagen in Kautschukmischung eingebettet, indem beispielsweise eine Schar von im Wesentlichen parallel liegenden fadenförmigen Festigkeitsträgern, die in der Regel thermisch und/oder zur besseren Haftung am einbettenden Kautschukmaterial in dem Fachmann bekannter Art mit einer Imprägnierung vorbehandelt sind, in Längsrichtung einen Kalander oder einen Extruder zur Ummantelung mit der Kautschukmischung durchlaufen. Oder aber es werden Festigkeitsträger verwendet, die klebrig imprägniert sind und ohne eine kalandrierte Haftmischung verarbeitet werden können.

Bei der Bombage und der Vulkanisation des Reifens dehnt sich der Reifen in der Regel im Schulterbereich durch die Erhebung um bis zu 2 % und im Mittenbereich um bis zu 4 % im Vergleich zum unvulkanisierten Rohling, wenn dieser Rohling auf einer flachen Trommel gewickelt wird. Somit soll der Festigkeitsträger, welcher in der Gürtelbandage eingesetzt ist, vorteilhafterweise diese Erhebung erlauben, also anfangs mit geringerem Kraftaufwand gedehnt werden können, jedoch nach dieser Anfangsdehnung bis 4% für die Hochgeschwindigkeitstauglichkeit mit nur höherem Kraftaufwand gedehnt werden können. In einem Kraft-Dehnungsdiagramm soll der Festigkeitsträger demnach bis zu einer Dehnung von 4% einen flacheren Verlauf und anschließend einen steileren Verlauf aufweisen.

Die Gürtelbandage ist ein- oder mehrlagig ausgebildet, deckt die Gürtelränder ab und weist als Umfangslage parallel und etwa in Umfangsrichtung verlaufende in eine Kautschukmischung eingebettete Festigkeitsträger auf. "Etwa in Umfangsrichtung" meint einen Winkel von 0° bis 10° in Bezug auf die Reifenumfangsrichtung.

In der Gürtelbandage von Fahrzeugluftreifen ist es heutzutage üblich, textile Festigkeitsträger aus einem oder mehreren Multifilamentgarnen zu verwenden, wie etwa in der EP3784502B1 oder der EP 3269561 B1 beschrieben.

Bei der Einbettung der Festigkeitsträger in die Kautschukmischung mittels Kalandrierens wird in der Regel ein Gewebe aufweisend die Schar an haftimprägnierten Festigkeitsträgern kalandriert und dieses Gewebe dann in Streifen von einigen Millimetern Breite geschnitten. Das Gewebe weist zu Stabilisierung zusätzliche Schussfäden in einem Winkel zu den tragenden Festigkeitsträgern, den Kettfäden, auf. Nachteilig hieran ist, dass ein solcher Schneidprozess unpräzise ist, so dass einzelne Festigkeitsträger beschädigt oder durchschnitten sein können, welche dann im Streifen zur Erreichung der gewünschten Festigkeit fehlen.

Bei der Einbettung der Festigkeitsträger in die Kautschukmischung mittels Extrudierens werden ein oder mehrere haftimprägnierte Festigkeitsträger durch eine Schablone geführt und durch Zuführen der Kautschukmischung mittels des Extruders in diese eingebettet. Vorteilhaft ist hierbei, dass direkt Streifen einer definierten Breite mit definierter Anzahl an Festigkeitsträgern erzeugt werden. Eine Stabilisierung durch zusätzliche in einem Winkel, insbesondere in 90°, zu den Festigkeitsträgern angeordnete zusätzliche Fäden, ist nicht nötig.

Nachteilig ist jedoch, dass die Löcher der Schablone zur Durchführung der Festigkeitsträger sehr eng ist. Dickeschwankungen oder eine Filamentierung der Festigkeitsträger können zur Klemmung oder zum Abriss der Festigkeitsträger führen, was zum Stopp der Anlage führen kann. Eine Filamentierung der Festigkeitsträger, erzeugt z.B. durch Filamentbrüche beim Twistprozess des Festigkeitsträgers, können zum Aufschieben oder Aufstau von Material in der Schablone führen.

Die Entwicklung geht dahin, den Rollwiderstand von Reifen zu verringern. Dies ist u.a. über dünne Festigkeitsträger erreichbar. Ein vergleichsweise dünner Festigkeitsträger kann durch ein einzelnes verdrehtes Multifilamentgarn (Einzelkord) gebildet sein. Derartige verdrehte Multifilamentgarne weisen aber in der Regel eine nachteilige Filamentierung der Festigkeitsträger bei Durchführung durch eine Schablone auf. Eine Ursache ist dabei der niedrige Twistfaktor für Einzelkorde bzw. der daraus entstehende geringe Helixwinkel der Filamente.

Deshalb ist es üblich, bei der Durchführung der Festigkeitsträger durch eine Schablone Korde aus mindestens zwei miteinander vertwisteten Multifilamentgarnen zu verwenden. Hier liegen die Filamente in einem größeren Winkel bezogen auf die Längsachse des Festigkeitsträgers, was den Prozess verbessert. Zudem ist ein solcher Kord, bei gleicher Feinheit, kompakter. Allerdings weisen solche Korde einen hohen Prozessaufwand für das Twisten, sowie einen geringeren Modul pro dtex auf, wodurch Dicke der Lage und Kosten nachteilig erhöht sind.

Der Erfindung liegt die Aufgabe zu Grunde, einen Verstärkungsstreifen für eine Festigkeitslage eines Fahrzeugreifens, insbesondere für die Gürtelbandage eines Fahrzeugluftreifens, zur Verfügung zu stellen, der eine kostengünstige und einfache Herstellbarkeit ermöglicht. Aufgabe ist es auch, ein solches Herstellungsverfahren zur Verfügung zu stellen sowie einen kostengünstigen Fahrzeugreifen.

Gelöst wird die Aufgabe bezüglich des Verstärkungsstreifens durch Anspruch 1. Gelöst wird die Aufgabe bezüglich des Verfahrens durch Anspruch 11.

Gelöst wird die Aufgabe bezüglich des Fahrzeugreifens durch Anspruch 13.

Gelöst wird die Aufgabe bezüglich des Verfahrens erfindungsgemäß dadurch, dass der Festigkeitsträger als Einzelkord aus genau einem Multifilamentgarn aufweisend einen Twistfaktor von 105 bis 200, bevorzugt von 110 bis 150, gebildet ist.

Es hat sich herausgestellt, dass sich erstaunlicherweise ein textiler Festigkeitsträger, der als Einzelkord aus einem einzelnen verdrehten Multifilamentgarn mit einem Twistfaktor von 105 bis 200, bevorzugt von 110 bis 150, gebildet ist, hervorragend zur kostengünstigen und einfachen Herstellung eines Verstärkungsstreifens eignet. Der vergleichsweise hohe Twistfaktor erzeugt zwar einen höheren Aufwand beim Twisten des Multifilamentgarns, allerdings ist das Handling des Rohmaterials weniger aufwändig, da lediglich ein Garn bei der Herstellung des Kordes zugeführt werden muss. Auch weist der einzelne Einzelkord einen höheren Modul pro Feinheit auf und ermöglicht somit einen reduzierten Materialeinsatz an Festigkeitsträgermaterial sowie eine reduzierte Lagendicke, wodurch der Materialeinsatz des Verstärkungsstreifen kostenvorteilhaft reduziert ist. Durch die hierdurch reduzierte Lagenstärke ist das Gewicht und der Rollwiderstand eines Reifens aufweisend einen solchen Verstärkungsstreifen in einer Festigkeitsträgerlage verringerbar.

Vor allem aber resultiert der hohe Twistfaktor von mindestens 105, bevorzugt 110, in einer reduzierten Anfälligkeit für eine Filamentierung. Ein Twistfaktor von über 200, oder von größer als 150, führt durch den zu großen Twist der Filamente wiederum auch zu einer Anfälligkeit für Filamentbrüche und zu möglichem Curling des Cords, d.h. einem sich selbstständigen Eindrehen, welches dann nur noch durch sehr hohe Vorspannungen verhindert werden kann. Es hat sich somit herausgestellt, dass der Verstärkungsstreifen somit zuverlässiger, einfacher und kostengünstiger mittels Durchführens des bzw. der Einzelkorde aufweisend einen Twistfaktor von 105 bis 200, bevorzugt von 110 bis 150, durch eine Lochschablone und anschließender Gummierung, insbesondere mittels Extrusion, erzeugt werden. Der Herstellungsprozess des Verstärkungsstreifens ist weniger störanfällig, insbesondere weniger störanfällig im Vergleich zu einem Verstärkungsstreifen mit einem Einzelkord mit einem Twistfaktor von kleiner als 105. Ausschuss wird vermieden und die Qualität des Verstärkungsstreifens verbessert. Hierdurch sind auch die Herstellungskosten weiter gesenkt.

Die geringe Filamentierung ist beim Durchführen der einzelnen Einzelkorde durch die Lochschablone vorteilhaft.

Der Verstärkungsstreifen besteht entweder aus einem einzelnen gummierten Einzelkord. Dieser kann zur Gummierung einzeln durch ein Schablonenloch geführt werden. Oder der Verstärkungsstreifen besteht aus einer Schar von parallel und beabstandet zueinander angeordneten Einzelkorden, welche im Kautschukmaterial eingebettet sind. Bei der Herstellung können die Einzelkorde parallel zueinander verlaufend jeweils durch ein Loch einer Lochschablone geführt sein und zusammen zum Steifen gummiert sein. Entsprechend weist der Streifen genau die eine Schar an Festigkeitsträgern auf. Es sind keine weiteren winklig zu den Festigkeitsträgern angeordnete Fäden vorhanden, die die Festigkeitsträger, insbesondere in einem Gewebe oder Gewirke, in ihrer Anordnung stabilisieren. Die Festigkeitsträger des Verstärkungsstreifens sind nicht verwobene Einzelfestigkeitsträger.

Somit ist ein Verstärkungsstreifen für eine Festigkeitslage eines Fahrzeugreifens, insbesondere für die Gürtelbandage eines Fahrzeugluftreifens, zur Verfügung gestellt, der bei definierter Festigkeit eine kostengünstige und einfache Herstellbarkeit, insbesondere an einer Cap Strip Line, ermöglicht.

Der "Twistfaktor" ist ein Maß für den Twist, also die Verdrehung in den Einheiten turns per meter [t/m], bezogen auf die jeweilige Feinheit. Der Twistfaktor ist dabei gleich dem Twist [t/m] * Wurzel (Feinheit des Kordes [tex]/1000).

Der Verstärkungsstreifen kann eine Breite von bis zu 20 mm aufweisen. Ein solcher Verstärkungsstreifen ist einfach herstellbar und kann mittels eines Spul- oder Wickelprozesses zur Festigkeitsträgerlage auf den Reifen aufgebracht werden.

Die Einzelkorde tragen über ihre Dehnungseigenschaften zur Ausgestaltung der Verstärkungsstreifen bei. Über die Dehnungseigenschaften werden die Eigenschaften der Festigkeitsträgerlage aufweisend den Verstärkungsstreifen maßgeblich beeinflusst.

Im Sinne der Anmeldung sind die Dehnungseigenschaften, insbesondere die Dehnungsbelastung bei 1 cN/dtex oder bei 2 cN/dtex sowie die Bruchdehnung, ermittelt am Rohkord gemäß ASTM D885.

"Rohkord" meint im Sinne der Anmeldung ein verdrehtes Multifilamentgarn, welches nicht heißverstreckt und haftimprägniert ist. "Einzelkord" meint einen

Festigkeitsträger aus genau einem Multifilamentgarn, welcher den Prozess der Heißverstreckung inklusive Imprägnierung bereits durchlaufen hat.

Vorteilhafte Ausführungsformen sind durch die Unteransprüche gegeben.

Eine vorteilhafte Ausführungsform ist dadurch gegeben, dass der Einzelkord eine Feinheit von 300 dtex bis 2000 dtex aufweist.

Eine solche Feinheit hat sich als besonders vorteilhaft herausgestellt. Eine Feinheit von kleiner als 300 dtex resultiert in einem zu schwachen Festigkeitsträger. Hierdurch ist auch das Durchführen durch eine Schablone erschwert. Eine Feinheit von größer als 2000 dtex resultiert in einem zu dicken Festigkeitsträger.

Eine vorteilhafte Ausführungsform ist dadurch gegeben, dass das Multifilamentgarn Polyamid (PA), bevorzugt Polyamid 6.6 (PA 66), aufweist oder daraus gebildet ist.

Somit sind einige oder alle Filamente des Multifilamentgarns aus PA, bevorzugt aus PA 66, gebildet.

Vorteilhaft an Polyamid ist der vorteilhafte Schrumpf durch Vermeidung von baubedingten Kompressionen, die über den Heizprozess herausgezogen werden können.

Vorteilhaft an PA 66 sind ausreichende Schrumpfkräfte, die, beim Aufheizen des Reifens durch Hochgeschwindigkeitsbeanspruchung, zusätzliche Umfangskräfte bereitstellen.

Geeignete Einzelkorde aus PA 66 weisen eine Feinheit von 470dtex, 700 dtex, 940 dtex, 1400 dtex, 1880 dtex, und einen Twistfaktor von 105 bis 200, bevorzugt von 110 bis 150, auf.

Eine vorteilhafte Ausführungsform ist dadurch gegeben, dass der Rohkord des Multifilamentgarns, welches PA, bevorzugt PA 66, aufweist oder daraus gebildet ist, bei einer Dehnungsbelastung mit 1 cN/dtex eine Dehnung von mindestens 3,0%, bevorzugt von mindestens 3,3 %, aufweist.

Ein derartiges Dehnungsverhalten ist vorteilhaft für den Einsatz in der Gürtelbandage eines Fahrzeugluftreifens. Eine durch ein solches Dehnungsverhalten ausreichende Umfangssteifigkeit genügt den High Speed Anforderungen beim Einsatz in der Gürtelbandage. Eine reduzierte Lagenstärke verbessert den Rollwiderstand und reduziert die Kosten.

Eine vorteilhafte Ausführungsform ist dadurch gegeben, dass der Rohkord des Multifilamentgarns, welches PA, bevorzugt PA 66, aufweist oder daraus gebildet ist, bei einer Dehnungsbelastung mit 2 cN/dtex eine Dehnung von mindestens 6,8 %, bevorzugt mindestens 7,0 %, aufweist.

Ein derartiges Dehnungsverhalten ist vorteilhaft für den Einsatz in der Gürtelbandage eines Fahrzeugluftreifens. Eine durch ein solches Dehnungsverhalten vorteilhafte Umfangssteifigkeit genügt den High Speed Anforderungen beim Einsatz in der Gürtelbandage. Eine reduzierte Lagenstärke verbessert den Rollwiderstand und reduziert die Kosten.

Eine vorteilhafte Ausführungsform ist dadurch gegeben, dass das Multifilamentgarn Polyester, bevorzugt Polyethylenterephthalat (PET), aufweist oder daraus gebildet ist.

Somit sind einige oder alle Filamente des Multifilamentgarns aus Polyester, bevorzugt aus PET, gebildet.

Vorteilhaft an Polyester ist die große Marktverfügbarkeit, auch als recyceltes Material.

Vorteilhaft an PET ist der hohe Modul. Geeignete Einzelkorde aus PET weisen eine Feinheit von 550 dtex, 720 dtex, 835 dtex, 1100 dtex oder 1440 dtex, sowie einen Twistfaktor von 105 bis 200, bevorzugt von 110 bis 150, auf.

Eine vorteilhafte Ausführungsform ist dadurch gegeben, dass der Rohkord des Multifilamentgarns, welches Polyester, bevorzugt PET, aufweist oder daraus gebildet ist, bei einer Dehnungsbelastung mit 1 cN/dtex eine Dehnung von mindestens 1,0 %, bevorzugt mindestens 1,2 %, aufweist.

Ein derartiges Dehnungsverhalten ist vorteilhaft für den Einsatz in der Gürtelbandage eines Fahrzeugluftreifens. Eine durch ein solches Dehnungsverhalten ausreichende Umfangssteifigkeit genügt den High Speed Anforderungen beim Einsatz in der Gürtelbandage. Eine reduzierte Lagenstärke verbessert den Rollwiderstand und reduziert die Kosten.

Eine vorteilhafte Ausführungsform ist dadurch gegeben, dass der Rohkord des Multifilamentgarns, welches Polyester, bevorzugt PET, aufweist oder daraus gebildet ist, bei einer Dehnungsbelastung mit 2 cN/dtex eine Dehnung von mindestens 3,3 %, bevorzugt mindestens 3,5 %, aufweist.

Ein derartiges Dehnungsverhalten ist vorteilhaft für den Einsatz in der Gürtelbandage eines Fahrzeugluftreifens. Eine durch ein solches Dehnungsverhalten ausreichende Umfangssteifigkeit genügt den High Speed Anforderungen beim Einsatz in der Gürtelbandage. Eine reduzierte Lagenstärke verbessert den Rollwiderstand und reduziert die Kosten.

Eine vorteilhafte Ausführungsform ist dadurch gegeben, dass der Rohkord eine Bruchdehnung von größer als 15 % aufweist. Der Rohkord kann, z.B. bei einem Rohkord aus PA 66, eine Bruchdehnung von größer als 20 %, bevorzugt von größer als 21 %, aufweisen.

Eine derartige Bruchdehnung ist vorteilhaft für den Einsatz in der Gürtelbandage eines Fahrzeugluftreifens.

Eine vorteilhafte Ausführungsform ist dadurch gegeben, dass der Verstärkungsstreifen 1 bis 18, bevorzugt 11 bis 15, besonders bevorzugt 13, Einzelkorde aufweist und/oder dass die Einzelkorde im Verstärkungsstreifen mit einer Anordnungsdichte von bis zu 180 epdm, bevorzugt von 90 bis 150 epdm, besonders bevorzugt von 100 epdm bis 140 epdm, angeordnet sind.

Derartige Streifen weisen eine vorteilhafte Weiterverarbeitbarkeit zu einer Festigkeitsträgerlage sowie eine hervorragende Eignung für die Gürtelbandage eines Fahrzeugluftreifens auf.

Bei einer Streifenbreite von 1 cm entspricht eine Anzahl von bis zu 18, bevorzugt 11 bis 15, besonders bevorzugt 13, an Festigkeitsträgern einer Anordnungsdichte von bis zu 180 epdm, bevorzugt von 110 bis 150 epdm, besonders bevorzugt von 130 epdm.

Als Material des Mulstifilamentgarns eignet sich sowohl konventionelles, insbesondere erdölbasiertes, Material und/oder recyceltes Material und/oder biobasiertes Material und/oder virgin (nicht biobasiertes) Material.

Eine vorteilhafte Ausführungsform ist dadurch gegeben, dass das Multifilamentgarn ganz oder teilweise aus recyceltem Material gebildet ist. Hierbei kann es sich insbesondere um PA, bevorzugt PA 66, und/oder um Polyester, bevorzugt PET, handeln.

Der Ausdruck recyceltes Material meint im Rahmen der vorliegenden Erfindung ein Material, welches durch wenigstens ein Recyclingverfahren erhalten wurde.

Bei dem Recyclingverfahren kann es sich um alle dem Fachmann bekannten Recyclingverfahren handeln, wie insbesondere chemisches und/oder mechanisches Recycling. Als Ausgangsmaterialien des Recyclings dienen insbesondere Flaschen, Kleidung und Garnabfälle.

Zu mechanischen Recyclingverfahren zählen im Rahmen der vorliegenden Erfindung auch Temperaturbehandlungen, wie insbesondere ein Umschmelzen. Chemisches Recycling ist im Rahmen der vorliegenden Erfindung jegliche Art von chemischer Aufbereitung von Abfällen und anschließender Neugewinnung von Erzeugnissen bzw. Vormaterialien daraus. Dies kann auch die komplette chemische Degenerierung zu Molekülen bedeuten, an denen die stoffliche Quelle, also die chemische Natur der Abfälle, nicht mehr unmittelbar erkennbar ist, und eine anschließende Synthese aus diesen Molekülen bis hin zu Polymeren, die dann bei dem erfindungsgemäßen Verfahren als recyceltes Material verwendet werden.

Recyceltes Material kann von nicht recyceltem Material durch das Vorhandensein von für das Recycling typischen Zusätzen unterschieden werden.

Das Material kann ganz oder teilweise aus nicht recyceltem (virgin) Material ausgebildet sein.

Eine vorteilhafte Ausführungsform ist dadurch gegeben, dass das Multifilamentgarn ganz oder teilweise aus biobasiertem Material gebildet ist. Hierbei kann es sich insbesondere um PA, bevorzugt PA 66, und/oder um Polyester, bevorzugt PET, handeln.

Der Ausdruck "biobasiertes Material" meint im Rahmen der vorliegenden Erfindung ein Material, welches stofflich vollständig oder zumindest teilweise aus Monomeren aufgebaut ist, welche aus Biomassen gewonnen wurden.

Das biobasierte Material kann dabei vollständig aus Monomeren aus Biomassen hergestellt sein, d.h. im Rahmen der Erfindung, dass 100 Gew.-% der Ausgangsmonomere unmittelbar stofflich aus Biomassen gewonnen wurden. Hierdurch ist der Verstärkungsstreifen aufweisend das biobasierte Material besonders hinsichtlich der Nachhaltigkeit bei gleichzeitig sehr guten Eigenschaften optimiert.

Das biobasierte Material kann aber auch nur teilweise aus Monomeren aus Biomassen hergestellt sein, insbesondere wenn ein Teil der dem Polymer zugrunde liegenden Monomere nicht über Biomassen zugänglich ist. Im Rahmen der vorliegenden Erfindung bedeutet "zumindest teilweise aus Biomassen hergestellt", dass mehr als 0 Gew.-% der Ausgangsmonomere unmittelbar stofflich aus Biomassen gewonnen wurden.

Hierdurch ist der Verstärkungsstreifen aufweisend das biobasierte Material hinsichtlich der je nach Verfügbarkeit von Ausgangsmaterialien erforderlichen Flexibilität und Nachhaltigkeit bei gleichzeitig sehr guten Eigenschaften optimiert.

Wie dem Fachmann bekannt ist, kann der Anteil der biobasierten Stoffe, also der Anteil aus nachwachsenden Rohstoffen im Polymer, gemäß der ASTM D 6866 (C-14-Methode) bestimmt werden.

Das Multifilamentgarn kann aber auch aus nicht biobasiertem Material ausgebildet sein oder dieses aufweisen, d.h. im Rahmen der Erfindung, dass keine der Ausgangsmonomere des nicht biobasierten Materials unmittelbar stofflich aus Biomassen gewonnen wurden. Es kann sich um konventionelles insbesondere erdölbasiertes Material handeln.

Um eine zuverlässige Haftung von textilen Festigkeitsträgern zur umgebenden Kautschukmischung zu gewährleisten, ist es zweckmäßig, dass die Festigkeitsträger mit einer Haftimprägnierung zur Gewährleistung der Haftung der Festigkeitsträger zum Kautschukmaterial versehen sind. Beispielsweise kann diese Haftimprägnierung mit einem RFL-Dip (Resorcin-Formaldehyd-Latex) erfolgen. Es sind aber auch alle weiteren dem Fachmann bekannten Verfahren und Haftmittel zur Imprägnierung denkbar, wie insbesondere Dips, die frei von Resorcin und Formaldehyden sind, wie beispielsweise in DE 102014211362 A1, WO 2019015792 A1, EP 3702521 A1, EP 3702522 A1 oder EP 3702523 A1 beschrieben. Die Haftungsausrüstung mittels eines Dips kann damit insbesondere im Stand der Technik bekannte 1-Bad- oder 2-Bad-Verfahren (Vor-Dip und Dip) umfassen.

Ferner können der fachkundigen Person bekannte weitere und übliche Vorbehandlungsverfahren durchgeführt werden, wie insbesondere eine Heißverstreckung. Die Heißverstreckung dient dazu, die Eigenschaften, wie beispielsweise Zugmodul, Bruchdehnung und Heißschrumpf des Festigkeitsträgers durch gezielte Verstreckung auf das gewünschte Niveau einzustellen, wobei die auf den Festigkeitsträger angelegte Spannung zwischen Zug und Relaxation variiert wird. Durch derartige Vorbehandlungsverfahren kann beispielsweise eine Festigkeits-Erhöhung vom haftimprägnierten und heißverstreckten Kord versus dem Rohkord bei 4% Dehnung von über 5 %, bevorzugt über 8%, erwirkt werden.

In Bezug auf das Verfahren zur Herstellung eines Verstärkungsstreifens für eine Festigkeitsträgerlage eines Fahrzeugreifens, bevorzugt für eine Gürtelbandagenlage eines Fahrzeugluftreifens, wird die Aufgabe dadurch gelöst, dass das Verfahren zumindest die folgenden Schritte in der folgenden Reihenfolge aufweist:
a) Bereitstellen von einem oder mehreren Einzelkorden, welche jeweils aus einem einzelnen Multifilamentgarn aufweisend einen Twistfaktor von 105 bis 200, bevorzugt von 110 bis 150, ausgebildet sind,
b) Führen des oder der Einzelkorde durch jeweils ein Loch einer Lochschablone,
c) Zuführen von Kautschukmaterial, insbesondere mittels eines Extruders, zur Einbettung des oder der durch das jeweilige Loch geführten Einzelkorde in das Kautschukmaterial.

Hierdurch ist auf einfache Art und Weise ein Verfahren zur Herstellung eines Verstärkungsstreifens erreicht. Durch den Twistfaktor von 105 bis 200, bevorzugt von 110 bis 150, des Multifilamentgarns ist das Risiko der Filamentierung bzw. Filamentbruchs verringert. Der jeweilige Einzelkord kann somit zuverlässig und einfach durch ein Loch der Lochschablone geführt werden. Das Risiko des Verklemmens oder Abreißens des Einzelkords beim Durchführen durch die Schablone ist verringert. Der Streifen wird mit einer definierten Anzahl an Festigkeitsträgern, die gleichzeitig durch die Schablone geführt werden, erzeugt werden. Somit weist der Streifen eine definierte Festigkeit auf. Ein Schneiden in Richtung der Festigkeitsträger ist nicht nötig, wodurch eine Variation in der Anzahl an zur Festigkeit beitragenden Festigkeitsträgern vermieden ist.

Der Streifen kann genau einen Einzelkord aufweisen.

Bei einer Mehrzahl an Festigkeitsträgern pro Verstärkungsstreifen liegen diese als eine Schar an parallel zueinander und beabstandet voneinander im Kautschukmaterial eingebetteten Einzelkorden vor. Der Streifen ist frei von weiteren winklig zu den Einzelkorden angeordneten Fäden, welche die Anordnung der Einzelkorden, insbesondere zu einem Gewebe oder Gewirke, stabilisieren würden.

Unmittelbar benachbarte Löcher der Lochschablone können einen Mindestabstand von 0,30 mm aufweisen.

Ein derartiges Verfahren wird üblicherweise auf einer Vorrichtung ausgeführt, welche in der Fachwelt unter der Bezeichnung "Cap Strip Line" bekannt ist. Entsprechend kann das Verfahren an einer Cap Strip Line durchgeführt werden. Eine vorteilhafte Ausführungsform ist dadurch gegeben, dass der Verstärkungsstreifen gemäß einem oder mehreren der vorgenannten Ausführungsformen des Verstärkungsstreifens ausgebildet ist.

Das oder die im Verfahren eingesetzten Einzelkorde können somit gemäß den vorhergehenden vorteilhaften Ausführungen ausgebildet sein.

So kann der eingesetzte Einzelkord eine Feinheit von 300 dtex bis 2000 dtex aufweisen.

So kann das Multifilamentgarn Polyamid (PA), bevorzugt Polyamid 6.6 (PA 66), aufweisen oder daraus gebildet sein. Dabei kann der Rohkord bei einer Dehnungsbelastung mit 1 cN/dtex eine Dehnung von mindestens 3,0%, bevorzugt von mindestens 3,3 %, aufweisen und/oder der Rohkord bei einer Dehnungsbelastung mit 2 cN/dtex eine Dehnung von mindestens 6,8 %, bevorzugt mindestens 7,0 %, aufweisen.

So kann das Multifilamentgarn Polyester, bevorzugt Polyethylenterephthalat (PET), aufweisen oder daraus gebildet sein. Dabei kann der Rohkord bei einer Dehnungsbelastung mit 1 cN/dtex eine Dehnung von mindestens 1,0 %, bevorzugt mindestens 1,2 %, aufweisen und/oder der Rohkord bei einer Dehnungsbelastung mit 2 cN/dtex eine Dehnung von mindestens 3,3 %, bevorzugt mindestens 3,5 %, aufweisen.

So kann der Rohkord des Einzelkords eine Bruchdehnung von größer als 15 %, bevorzugt von größer als 20%, bevorzugt größer als 21%, aufweisen.

So können 1 bis 18, bevorzugt 11 bis 15, besonders bevorzugt 13, Einzelkorde durch die Schablone geführt werden und/oder die Einzelkorde können mit einer Anordnungsdichte von bis zu 180 epdm, bevorzugt von 90 epdm bis 150 epdm, besonders bevorzugt von 100 epdm bis 140 epdm, durch die Schablone geführt werden.

Als Material des Multifilamentgarns eignet sich sowohl konventionelles, insbesondere erdölbasiertes, Material und/oder recyceltes Material und/oder biobasiertes Material und/oder virgin (nicht biobasiertes) Material.

Der Rohkord kann die Prozessschritte der Haftimprägnierung und / oder Heißverstreckung durchlaufen haben.

In Bezug auf den Fahrzeugreifen aufweisend eine Festigkeitsträgerlage, bevorzugt Fahrzeugluftreifen aufweisend eine Gürtelbandagenlage, wird die Aufgabe dadurch gelöst, dass die Festigkeitsträgerlage einen oder mehrere der Verstärkungsstreifen aufweist, welche gemäß einem oder mehreren der vorgenannten Ausführungsformen ausgebildet ist oder sind und/oder durch das vorgenannte Herstellungsverfahren hergestellt sind.

Ein solcher Fahrzeugluftreifen ist über den vorteilhaft herzustellenden Verstärkungsstreifen mit den genannten vorteilhaften Eigenschaften einfach, kostengünstig und zuverlässig herstellbar. Zudem ist der Rollwiderstand durch die verringerte Lagendicke reduzierbar. Entsprechend ist der Reifen in seinem Betrieb kostengünstiger.

Vorteilhaft ist es, wenn es sich um einen Fahrzeugluftreifen handelt.

Besonders vorteilhaft ist es, wenn der Fahrzeugluftreifen eine Festigkeitsträgerlage, insbesondere eine Gürtelbandagenlage, mit dem Verstärkungsstreifen aufweist, wobei der Verstärkungsstreifen einen Winkel von maximal 10° zur Umfangsrichtung einschließt. Eine solche Lage kann auf einfache Art und Weise durch Spulen oder Wickeln des vorteilhaften Verstärkungsstreifens hergestellt werden.

Für die Gürtelbandagenlage eignen sich insbesondere die genannten Einzelkorde, insbesondere aus PA 66 oder aus PET.

Die Festigkeitsträgerlage des Reifens, welche den Verstärkungsstreifen aufweist, kann aber auch ein Wulstverstärker, wie ein Chipper oder ein Flipper, sein.

Der erfindungsgemäße Fahrzeugluftreifen ist bevorzugt ein Reifen für einen Personenkraftwagen oder einen Van oder einen Light-Truck. Bevorzugt handelt es sich um einen Reifen radialer Bauart.

Die Herstellung des Fahrzeugreifens erfolgt auf dem Fachmann bekannte Weise mit dem Fachmann bekannten Vorrichtungen.

Hierbei wird insbesondere zunächst ein unvulkanisierter Rohling eines unvulkanisierten Fahrzeugreifens aufweisend den erfindungsgemäßen Verstärkungsstreifen, insbesondere in einer Gürtelbandage, durch Aufeinanderlegen der entsprechenden Bauteile, welche unvulkanisierte Kautschukmischungen umfassen, bereitgestellt. Anschließend wir der Rohling vulkanisiert.

Die Gürtelbandage ist bevorzugt in einem Winkel von 0° bis 10° zur Umfangsrichtung einlagig oder mehrlagig ausgebildet, wobei einlagig besonders bevorzugt ist. Sie kann dabei durch Auflegen, insbesondere Spulen oder Wickeln, bevorzugt Spulen, des Verstärkungsstreifens gebildet werden.

Von der Erfindung sind sämtliche vorteilhaften Ausgestaltungen und Verfahren, die sich unter anderem in den Patentansprüchen widerspiegeln, umfasst. Insbesondere sind von der Erfindung auch Ausgestaltungen und Verfahren umfasst, die sich durch Kombination unterschiedlicher Merkmale unterschiedlicher Abstufungen bei der Bevorzugung dieser Merkmale ergeben, sodass auch eine Kombination eines ersten als "bevorzugt" bezeichneten Merkmals mit einem weiteren als z. B. "besonders bevorzugt" bezeichneten Merkmal von der Erfindung erfasst ist.

Im Folgenden wird die Erfindung anhand von Ausführungsbeispielen gemäß der Erfindung näher erläutert, ohne jedoch auf diese beschränkt zu sein.

In der Tabelle 1 sind für Einzelkorde EK1 bis EK3 von erfindungsgemäßen Verstärkungsstreifen Werte für den Rohkord wie der Twistfaktor, Dehnung bei einer Dehnungsbelastung mit 1 cN/dtex beziehungsweise mit 2 cN/dtex, Bruchdehnung, LASE 4% [N], sowie der Durchmesser der Korde angegeben. LASE steht für Load at Specific Elongation. LASE 4% meint hier die Kraft bei einer vorgegebenen Dehnung von 4%. Alle Dehnungseigenschaften sind ermittelt am Rohkord gemäß ASTM D885. Die Konstruktion der Einzelkorde wird mit x1 bezeichnet. Die Multifilamentgarne der Einzelkorde weisen die jeweils angegebene Feinheit auf.

Ebenso sind als Vergleich in der Tabelle1 für die genannten Größen übliche Wertebereiche für Korde von nicht erfindungsgemäßen Verstärkungsstreifen angegeben. Es handelt sich um Korde der Konstruktion x2, welche aus zwei miteinander verdrehten Multifilamentgarnen der in der Tabelle angegebenen Feinheit gebildet sind, welche als Vergleichskorde VK1 und VK2 bezeichnet sind.

Weiter ist für alle Korde eine, insbesondere für den Einsatz in der Gürtelbandage eines Fahrzeugluftreifens, geeignete Festigkeitsträgerdichte (Dichte) in der Einheit epdm (Enden pro Dezimeter) angegeben. Es kann sich dabei um die Festigkeitsträgerdichte des Verstärkungsstreifens aufweisend mehrere Korde handeln.

**Tabelle 1**

| | VK1 | VK2 | EK1 | EK2 | EK3 |
|---|---|---|---|---|---|
| Material | PA 66 | PA 66 | PA 66 | PET | PA 66 |
| Feinheit [dtex] und Konstruktion | 470 x2 | 940 x2 | 940 x1 | 720 x1 | 1400 x1 |
| Twist [t/m] | 400-440 | 330-370 | 370 | 425 | 300 |
| Twistfaktor | 123-135 | 143-160 | 113 | 114 | 112 |
| Durchmesser [mm] | 0,40-0,50 | 0,55-0,65 | 0,37 | 0,23 | 0,45 |
| Dehnung bei 1cN/dtex [%] | 3,1-3,9 | 3,4-4,4 | 3,6 | 1,4 | 3,7 |
| Dehnung bei 2cN/dtex [%] | 6,4-8,0 | 6,8-8,6 | 7,3 | 3,7 | 7,5 |
| Bruchdehnung [%] | 20-22 | 20,5-22,5 | 21,4 | 15,7 | 21,3 |
| LASE 4% [N] | 9,1-11,5 | 17,0-21,6 | 10,2 | 15,2 | 13,3 |
| Dichte [epdm] | 130 | 80 | 130 | 120 | 130 |
| LASE 4% * Dichte [N/dm] | 1183-1495 | 1360-1728 | 1326 | 1824 | 1729 |

Beim Einsatz in der Gürtelbandage eines Fahrzeugluftreifens können übliche Verstärkungsstreifen mit Vergleichskorden gemäß VK1 beispielsweise durch Verstärkungsstreifen mit dünneren Einzelkorden EK1 und EK2 ersetzt werden. Übliche Verstärkungsstreifen mit Vergleichskorden gemäß VK2 können beispielsweise durch Verstärkungsstreifen mit dünneren Einzelkorden EK2 und EK3 ersetzt werden. Beispielhaft sei angeführt, dass sich durch die genannten Ersatzmöglichkeiten mit den in der Tabelle jeweils angegebenen Dichten beispielsweise jeweils eine ausreichende bzw. höhere Festigkeit * Dichte beziehungsweise eine ausreichende bzw. höhere LASE 4% * Dichte bei gleichzeitig reduziertem Durchmesser ergibt.

Die Einzelkorde EK1, EK2 und EK3 eignen sich hervorragend für die Durchführung durch eine Schablone. Ein Verstärkungsstreifen aufweisend diese Einzelkorde kann somit zuverlässig mittels Schablone und Extrusion hergestellt werden. Gleichzeitig weisen die Einzelkorde EK1 bis EK3 die dargestellten, insbesondere für den Einsatz in einer Gürtelbandage eines Fahrzeugluftreifens, vorteilhaften Dehnungseigenschaften auf. Hervorzuheben ist dabei die Bruchdehnung von mindestens 15%.

Die in der Tabelle 1 aufgeführten Einzelkorde EK1 bis EK3 eignen sich hervorragend als Festigkeitsträger der insbesondere durch das erfindungsgemäße Verfahren hergestellte erfindungsgemäßen Verstärkungsstreifen. Derartige Verstärkungsstreifen eignen sich hervorragend für den Einsatz im Fahrzeugluftreifen, bevorzugt angeordnet in einem Winkel von maximal 10° zur Umfangsrichtung, besonders bevorzugt in der Gürtelbandage.

## Patentansprüche

1. Verstärkungsstreifen für einen Fahrzeugreifen, vorzugsweise für eine Gürtelbandagenlage eines Fahrzeugluftreifens, wobei der Verstärkungsstreifen Kautschukmaterial aufweist, in welches lediglich ein textiler Festigkeitsträger oder lediglich eine Schar von parallel und beabstandet zueinander angeordneten textilen Festigkeitsträgern eingebettet ist oder sind,
**dadurch gekennzeichnet, dass**
der Festigkeitsträger als Einzelkord aus genau einem Multifilamentgarn aufweisend einen Twistfaktor von 105 bis 200, bevorzugt von 110 bis 150, gebildet ist.

2. Verstärkungsstreifen gemäß Anspruch 1, **dadurch gekennzeichnet, dass** der Einzelkord eine Feinheit von 300 dtex bis 2000 dtex aufweist.

3. Verstärkungsstreifen nach Anspruch 1 oder 2, **dadurch gekennzeichnet, dass** das Multifilamentgarn Polyamid (PA), bevorzugt Polyamid 6.6 (PA 66), aufweist oder daraus gebildet ist.

4. Verstärkungsstreifen nach Anspruch 3, **dadurch gekennzeichnet, dass** der Rohkord bei einer Dehnungsbelastung mit 1 cN/dtex eine Dehnung von mindestens 3,0%, bevorzugt von mindestens 3,3 %, aufweist.

5. Verstärkungsstreifen nach Anspruch 3 oder 4, **dadurch gekennzeichnet, dass** der Rohkord bei einer Dehnungsbelastung mit 2 cN/dtex eine Dehnung von mindestens 6,8 %, bevorzugt mindestens 7,0 %, aufweist.

6. Verstärkungsstreifen nach Anspruch 1 oder 2, **dadurch gekennzeichnet, dass** das Multifilamentgarn Polyester, bevorzugt Polyethylenterephthalat (PET), aufweist oder daraus gebildet ist.

7. Verstärkungsstreifen nach Anspruch 6, **dadurch gekennzeichnet, dass** der Rohkord bei einer Dehnungsbelastung mit 1 cN/dtex eine Dehnung von mindestens 1,0 %, bevorzugt mindestens 1,2 %, aufweist.

8. Verstärkungsstreifen nach Anspruch 6 oder 7, **dadurch gekennzeichnet, dass** der Rohkord bei einer Dehnungsbelastung mit 2 cN/dtex eine Dehnung von mindestens 3,3 %, bevorzugt mindestens 3,5 %, aufweist.

9. Verstärkungsstreifen nach zumindest einem der vorhergehenden Ansprüche, **dadurch gekennzeichnet, dass** der Rohkord eine Bruchdehnung von größer als 15 %, bevorzugt von größer als 20%, besonders bevorzugt größer als 21%, aufweist.

10. Verstärkungsstreifen nach zumindest einem der vorhergehenden Ansprüche, **dadurch gekennzeichnet, dass** der Verstärkungsstreifen 1 bis 18, bevorzugt 11 bis 15, besonders bevorzugt 13, Einzelkorde aufweist und/oder dass die Einzelkorde im Verstärkungsstreifen mit einer Anordnungsdichte von bis zu 180 epdm, bevorzugt von 90 bis 150 epdm, besonders bevorzugt von 100 epdm bis 140 epdm, angeordnet sind.

11. Verfahren zur Herstellung eines Verstärkungsstreifens für eine Festigkeitsträgerlage eines Fahrzeugreifens, bevorzugt für eine Gürtelbandagenlage eines Fahrzeugluftreifens, durch zumindest die folgenden Schritte in der folgenden Reihenfolge:
a) Bereitstellen von einem oder mehreren Einzelkorden, welche jeweils aus einem einzelnen Multifilamentgarn aufweisend einen Twistfaktor von 105 bis 200, bevorzugt von 110 bis 150, ausgebildet sind,
b) Führen des oder der Einzelkorde durch jeweils ein Loch einer Lochschablone,
c) Zuführen von Kautschukmaterial, insbesondere mittels eines Extruders, zur Einbettung des oder der durch das jeweilige Loch geführten Einzelkorde in das Kautschukmaterial.

12. Verfahren gemäß Anspruch 11, **dadurch gekennzeichnet, dass** der hergestellte Verstärkungsstreifen gemäß einem oder mehreren der Ansprüche 1 bis 10 ausgebildet ist.

13. Fahrzeugreifen aufweisend eine Festigkeitsträgerlage, bevorzugt Fahrzeugluftreifen aufweisend eine Gürtelbandagenlage, wobei die Festigkeitsträgerlage einen oder mehrere der Verstärkungsstreifen gemäß einem oder mehreren der Ansprüche 1 bis 10 aufweist und/oder gemäß dem Verfahren gemäß den Ansprüchen 11 oder 12 hergestellt ist, bevorzugt dass der Verstärkungsstreifen am Reifen in einem Winkel von maximal 10° zur Umfangsrichtung ausgerichtet ist.
